# EUROPEAN PATENT SPECIFICATION

(11) **EP 4 226 147 B1**
(45) Date of publication and mention of the grant of the patent: **25.06.2025**
(21) Application number: 21799099.3
(22) Date of filing: 05.10.2021
(51) Int. Cl.: G01N 23/083, G01N 23/16, G01N 9/02, G01N 9/24, G01B 15/02, G01B 21/08

(54) **DETECTION SYSTEM AND METHOD TO DETECT THE DENSITY OF A LAYER OF COMPACTED CERAMIC POWDER**
DETEKTIONSSYSTEM UND VERFAHREN ZUR DETEKTION DER DICHTE EINER SCHICHT AUS VERDICHTETEM KERAMIKPULVER
SYSTÈME ET PROCÉDÉ DE DÉTECTION POUR DÉTECTER LA DENSITÉ D'UNE COUCHE DE POUDRE DE CÉRAMIQUE COMPACTÉE

(30) Priority: 05.10.2020 IT 202000023374
(43) Date of publication of application: 16.08.2023
(73) Proprietor: SACMI COOPERATIVA MECCANICI IMOLA SOCIETA' COOPERATIVA, 40026 Imola (BO) (IT)
(72) Inventor: TESTI, Paolo, 40026 Imola (BO) (IT); RICCI, Claudio, 40026 Imola (BO) (IT)
(74) Representative: Studio Torta S.p.A.
(86) International application number: PCT/IB2021/059122
(87) International publication number: WO 2022/074556

(56) References cited:
- EP-A1- 1 318 377
- WO-A1-2018/051257
- WO-A1-2020/058933
- ES-A1- 2 208 120

## Description

### CROSS-REFERENCE TO RELATED APPLICATIONS

This patent application claims priority from Italian patent application no. 102020000023374 filed on 05/10/2020.

### TECHNICAL FIELD

The present invention relates to a detection system and to a method to detect the density of a layer of compacted ceramic powder.

### BACKGROUND OF THE INVENTION

In the manufacturing field of ceramic products, in particular ceramic slabs or tiles, ceramic products are manufactured in systems in which semi-dry ceramic powder (i.e., with a moisture content of less than 10%, in particular comprised between 5 and 6%) is fed (typically substantially continuously) along a given path through a discontinuous compacting machine (commonly known as press) or a continuous compacting assembly, which subjects the ceramic powder to a compacting pressure, so as to obtain a layer of compacted ceramic powder. In detail, when compacting takes place by means of a discontinuous compacting machine, the layer of compacted ceramic powder substantially has the dimensions of a compacted ceramic powder article (i.e., the dimensions of a ceramic slab or tile) to be subjected to subsequent drying, optional decorating and firing operations so as to obtain a finished ceramic product, in particular a ceramic slab or tile; instead, when compacting takes place by means of the continuous compacting assembly, the layer of compacted ceramic powder is in the form of a continuous strip of compacted ceramic powder, which is subsequently cut to obtain a plurality of compacted ceramic powder articles (having the dimensions of a ceramic slab or tile) which will then be dried, optionally decorated, and fired to obtain the finished ceramic products.

Compacting of the ceramic powder, both when carried out by means of one or more discontinuous compacting machines and by means of a continuous compacting assembly, requires precision and control in order for the layer of compacted ceramic powder (and hence the compacted ceramic powder articles) to have a density that is as homogeneous as possible and at the same time able to ensure correct behaviour during firing. In fact, the more homogeneous the density inside the article of compacted ceramic powder is, the fewer the distortions it will undergo during the subsequent operations, in particular during firing, will be. Moreover, to ensure the reproducibility of production (i.e., to produce, in each production cycle, ceramic products that are the same as one another), the density value must remain stable throughout the whole of the production cycle, to avoid shrinkage differences (normally comprised between 7 and 8%) that would lead to rejects and/or dimensional deviations.

From the above, it is clear that the density of the layer of compacted ceramic powder is an essential physical parameter to be kept under control during the production of ceramic products. Currently, this parameter is generally detected with mercury or glycerine immersion measuring devices that allow determination of the mass and volume, and consequently calculation of the density, of a specifically produced sample of compacted ceramic powder. In detail, the known procedure to detect the density of a layer of compacted ceramic powder comprises producing a sample, typically with small dimensions (in particular, in the order of 1 cm per side), immersing this sample in a mercury or glycerine bath so as to determine its weight, using a mercury or glycerine immersion balance, and the volume, measuring the hydrostatic thrust necessary to keep the sample immersed in the bath itself.

However, this procedure is particularly laborious and must be conducted by skilled operators in order to minimise the risk of errors and obtain reliable measurements. Another disadvantage of this procedure is linked to the fact that it requires the production of a specific sample which is generally obtained from a compacted ceramic powder article, which will then be discarded, with consequent economic drawbacks.

Moreover, in the case of use of mercury immersion measuring devices, there is a further drawback linked to the fact that the use of mercury is potentially harmful to human health and therefore its use requires compliance with specific safety requirements.

Added to this is the fact that the procedure described above to detect the density cannot be used when the production of ceramic products is carried out in a continuous production line and, more in detail, when compacting the ceramic powder is carried out in a continuous compacting assembly, such as, for example, those described in the patents EP1283097B1, EP1356909B1, EP1641607B1, EP2763827B1, WO2013050865A1. In fact, in these cases the ceramic powder is fed and moves on a lower conveyor belt while an upper belt causes it to become gradually thicker until reaching two pressing rollers that apply a final compacting pressure so as to obtain a layer of compacted ceramic powder in the form of continuous strip of compacted ceramic powder, which will then be cut to obtain a plurality of compacted ceramic powder articles. It is clear that the procedure for detecting the density described above (which envisages the production of a specific sample and immersion of this sample in a mercury or glycerine bath) would cause discontinuity in the continuous production line, with negative effects on its productivity.

Therefore, in these cases, the density is determined through detection systems arranged in line and configured to detect (in a non-destructive manner) the density of the layer of compacted ceramic powder (more in particular, in general of compacted ceramic powder articles), during movement along the production line. In detail, a known detection system of the density determines the density of each compacted ceramic powder article based on the thickness of the article itself and the absorption of X-rays applying the Beer-Lambert law. However, according to the Beer-Lambert law, the density value, in addition to the thickness and to the absorption of X-rays, also depends on an absorption coefficient that is an intrinsic property of the ceramic material being compacted. Therefore, in order to estimate the density correctly, the detection system must be calibrated, inputting the data relating to this absorption coefficient each time the ceramic material that feeds the production line is changed. Currently, the absorption coefficient is typically measured using the measuring devices in a mercury or glycerine bath described above, with all the aforesaid drawbacks.

Added to these drawbacks is a slowing of the production cycle of the continuous production line of the ceramic products caused by the calibration operations, the impact of which in terms of machine stoppage, and therefore drops in productivity, becomes increasingly important the more frequently the ceramic material that feeds the production line is changed, hence the more often these calibration operations must be repeated.

Examples of known detection methods and systems of the type described above, which allow determination of the density of each compacted ceramic powder article based on the absorption of radiation of different types, for example X-rays or laser rays, are described in the documents WO2018051257, ES2208120 and WO2020058933.

The object of the present invention is to provide a detection system and a method to detect the density of compacted ceramic powder articles, said detection system and method allowing to at least partially overcome the drawbacks of the known art and which at the same time are simple and inexpensive to produce.

### SUMMARY

In accordance with the present invention, a detection system and a method to detect the density of a layer of compacted ceramic powder are provided according to the annexed independent claims, and preferably, any one of the claims directly or indirectly dependent on the aforesaid independent claims.

The claims describe preferred embodiments of the present invention forming an integral part of the present description.

### BRIEF DESCRIPTION OF THE DRAWINGS

The invention will now be described with reference to the attached drawings, which show some non-limiting embodiments thereof, wherein:
- Fig. 1 is a side and schematic view of a detection system to detect the density of a layer of compacted ceramic powder;
- Fig. 2 is a schematic side view on an enlarged scale of a part of the detection system of Fig. 1;
- Fig. 3 is a schematic and side view of a further part of the detection system of Fig. 1 in accordance with a first embodiment of the invention; and
- Figs. 4 and 5 are schematic and side views of the same part of the detection system depicted in Fig. 3 in accordance with a further embodiment of the invention, in two different operating configurations.

### DETAILED DESCRIPTION

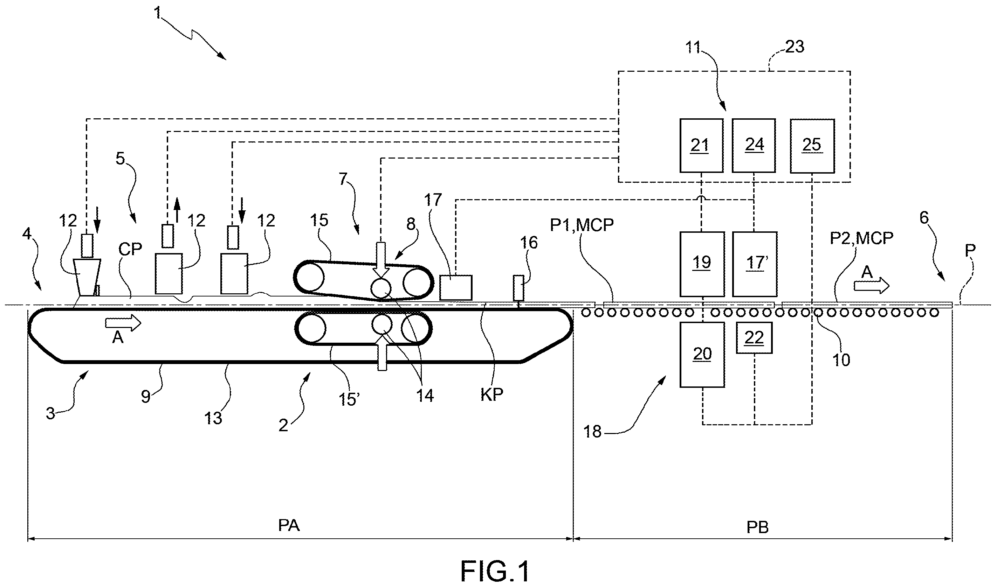

In Fig. 1 the number 1 indicates as a whole a detection system to detect the density of a layer of compacted ceramic powder KP.

In the present description, the expression "layer of compacted ceramic powder" refers generically to a quantity (i.e., to a mass) of ceramic powder CP after it has been compacted. In other words, the expression "layer of compacted ceramic powder" refers both to a continuous strip of compacted ceramic powder coming out of a continuous compacting assembly 2 (as, for example, illustrated in Fig. 1), and to a compacted ceramic powder article MCP formed following cutting of the aforesaid continuous strip of compacted ceramic powder or (in accordance with further embodiments, not illustrated) formed directly by compacting a dosed quantity of (uncompacted) ceramic powder CP inside a discontinuous compacting machine (i.e., a press).

According to some advantageous, but non-exclusive, embodiments (such as the one illustrated in Fig. 1), the detection system 1 comprises a conveyor assembly 3 configured to convey the (uncompacted) ceramic powder CP along a given path P that extends in a moving direction A from an inlet station 4, at which a feeding assembly 5 feeds a given quantity (i.e. a mass) of (uncompacted) ceramic powder CP, to an outlet station 6, passing through at least one compacting station 7, where this (uncompacted) ceramic powder CP is compacted by a compacting device 8 (which is also part of the detection system 1), and through a detection station 11, where the density of the layer of compacted ceramic powder KP is detected.

According to some advantageous, but non-exclusive, embodiments (such as the one illustrated in Fig. 1), the conveyor assembly 3 comprises a conveyor device 9 configured to receive the given quantity (i.e., the mass) of (uncompacted) ceramic powder CP and convey it (substantially continuously) from the inlet station 4 to the (end of the) compacting station 7 along a segment PA of the given path P; and a further conveyor device 10 arranged and configured to receive (in particular, from the conveyor device 9) the layer of compacted ceramic powder KP, or a part thereof, and convey it (substantially continuously) from the compacting station 7 to the outlet station 6, passing through the detection station 11, along a further segment PB of the given path P.

Advantageously, but without limitation, the given path P that goes from the inlet station 4 to the outlet station 6 comprises (in particular, consists of) segments PA and PB that follow one another continuously, i.e., without the interposition of other segments.

According to some advantageous, but non-limiting, embodiments, the feeding assembly 5 comprises at least one dispensing device 12 (for example, in the non-limiting embodiment illustrated in Fig. 1, three dispensing devices 12 arranged one after another along the segment PA of the given path P and each) configured to produce a variable loading profile both along the moving direction A and crosswise to the moving direction A.

Advantageously, but without limitation, the compacting device 8 is arranged at the compacting station 7 downstream of the feeding assembly 5 along the segment PA of the given path P and is configured to apply a controlled compacting pressure on the (uncompacted) ceramic powder CP itself so as to compact the ceramic powder CP and obtain the layer of compacted ceramic powder KP.

In particular, according to some advantageous, but non-limiting, embodiments (such as the one illustrated in Fig. 1), the compacting device 8 comprises (in particular, consists of) a continuous compacting assembly 2 arranged along the segment PA of the given path P. In this case, advantageously, but without limitation, the conveyor device 9 comprises (in particular, consists of) a conveyor belt 13 that extends (and is configured to move) from the inlet station 4 to the (and through the) compacting station 7 along the segment PA of the aforesaid given path P and the compacting device 8 (more in particular, the continuous compacting assembly 2) comprises at least two compression rollers 14 arranged on opposite sides of the (in particular, one above and one below the) conveyor belt 13 to exert a pressure on the (uncompacted) ceramic powder CP so as to compact the (uncompacted) ceramic powder CP itself and obtain the layer of compacted ceramic powder KP.

Moreover, advantageously but not necessarily, (as illustrated, for example, in Fig. 1), the compacting device 8 (in particular, the continuous compacting assembly 2) comprises a pressure belt 15, arranged between the feeding assembly 5 and the aforesaid compression rollers 14, said pressure belt 15 converging toward the conveyor belt 13 in the moving direction A so as to exert a (downward) pressure that gradually increases in the direction A on the ceramic powder CP so as to compact it while it moves along the segment PA of the given path P. In particular, the pressure belt 15 is (mainly) made of metal (steel) so that it cannot be substantially deformed while pressure is exerted on the ceramic powder.

According to specific embodiments (such as the one illustrated in Fig. 1), in this case the compacting device 8 (in particular, continuous compacting assembly 2) also comprises a counter-pressure belt 15' arranged on the opposite side of the conveyor belt 13 (in particular, made of rubber or a similar material) relative to the pressure belt 15 to cooperate with the conveyor belt 13 to provide a suitable opposition to the downward force exerted by the pressure belt 15. In these cases, in particular, the counter-pressure belt 15' is (mainly) made of metal (steel) so that it cannot be substantially deformed while pressure is exerted on the ceramic powder.

According to some embodiments, not illustrated, the counter-pressure belt 15' and the conveyor belt 13 coincide. In other words, the conveyor belt 13 is (mainly) made of metal (steel) and the counter-pressure belt 15' is absent.

In these cases, i.e., when the compacting device 8 comprises a continuous compacting assembly 2, the detection system 1 also comprises a cutting device 16 (schematically illustrated in Fig. 1) which is arranged downstream of the continuous compacting assembly 2 (in particular, at the compacting station 7 but downstream of the compacting device 8) along the first segment PA of the given path P and configured to cut the layer of compacted ceramic powder KP generated by the continuous compacting assembly 2 (while this layer of compacted ceramic powder KP moves continuously along the segment PA) crosswise, so as to obtain at least one first portion P1 and one second portion P2. In particular (advantageously, but without limitation), the cutting device 16 cuts the layer of compacted ceramic powder KP crosswise so as to obtain a plurality of compacted ceramic powder articles MCP, each of which comprises (in particular, has; even more in particular, consists of) a respective portion P1, P2 of the layer of compacted ceramic powder KP. Even more in particular, each of the compacted ceramic powder articles MCP coincides with a portion P1, P2 of the layer of compacted ceramic powder KP.

According to some advantageous, but non-limiting, embodiments, the cutting device 16 comprises at least one cutting blade (not illustrated) configured to come into contact with the layer of compacted ceramic powder KP and to cut it, in particular during cutting this blade is operated to move along a transverse trajectory relative to the moving direction A so as to provide the compacted ceramic powder articles MCP with end edges substantially perpendicular to the direction A.

According to alternative embodiments, not illustrated, the compacting device 8 comprises (in particular, consists of) at least one discontinuous compacting machine (commonly known as press - known per se and therefore not described in further detail), arranged immediately downstream of the feeding assembly 5 along the segment PA of the given path P and configured to compact a dosed quantity of (uncompacted) ceramic powder CP, which in this case, advantageously, but not necessarily, will be fed by the feeding assembly 5 directly to the discontinuous compacting machine to generate the layer of compacted ceramic powder KP, and in particular at least the aforesaid first portion P1 of the layer of compacted ceramic powder.

In these cases (i.e., when the compacting device 8 comprises a discontinuous compacting machine), advantageously, but without limitation, the detection system 1 comprises at least a further compacting device (not illustrated) which also comprises (in particular, consists of) a further discontinuous compacting machine configured to compact a further dosed quantity of (uncompacted) ceramic powder CP (which, also in this case, advantageously, but not necessarily, will be fed by the feeding assembly 5 directly to the further discontinuous compacting machine) to generate a further layer of compacted ceramic powder and, in particular, to generate the aforesaid second portion P2 (of the further layer of compacted ceramic powder).

Alternatively, advantageously, but without limitation, the compacting device 8 and the further compacting device can coincide with one another, i.e., the detection system 1 can comprise a single discontinuous compacting machine that generates in several subsequent processing (i.e., pressing) cycles, the aforesaid first portion P1 and second portion P2; in particular, several compacted ceramic powder articles MCP.

According to some advantageous, but non-exclusive, embodiments, the detection system 1 furthermore comprises a measuring device 17 configured to measure at least a thickness of at least one cross section of the layer of compacted ceramic powder KP. Advantageously, in order to improve the precision of this measurement, the measuring device 17 is configured to carry out at least two, in particular at least three, measurements (at the aforesaid cross section of the layer of compacted ceramic powder KP) to determine the aforesaid thickness. Alternatively, or in combination, the measuring device 17 is, advantageously, but without limitation, configured to measure the thickness of at least two cross sections, more in particular of at least three cross sections, of the layer of compacted ceramic powder KP, so as to also take into account any variations of thickness along the transverse extension of the layer of compacted ceramic powder KP.

According to some non-exclusive embodiments (such as the one illustrated in Fig. 1), the measuring device 17 is arranged along the segment PA of the given path P (in particular at the compacting station 7 and) downstream of the compacting device 8, even more in particular between the compacting device 8 and the cutting device 16, when present.

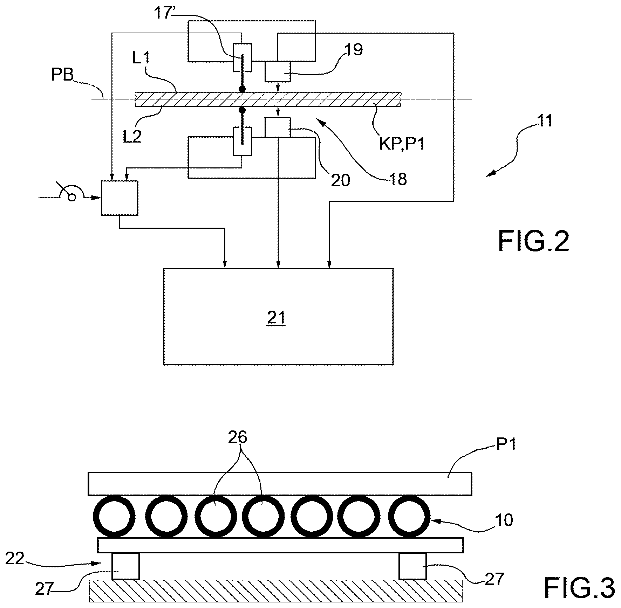

Alternatively, or in combination (according to other embodiments such as the one illustrated - see Figs. 1 and 2), the detection system 1 (also) comprises a (further) measuring device 17', similar to the measuring device 17, arranged along the segment PB of the given path P and forming part of a detection device 18, which will be described in more detail in the following.

According to other advantageous, and non-limiting, embodiments, the measuring device 17 and the further measuring device 17' coincide with one another, i.e., the detection system 1 is provided with a single measuring device 17, 17' (which can be part of the detection device 18 or be separate from the detection device 18 and which is) configured to detect the thickness of the layer of compacted ceramic powder KP or of a portion P1, P2 thereof. These thicknesses (of the layer of compacted ceramic powder KP or of a portion P1, P2 thereof) are, in fact, substantially coincident with one another. In other words, according to some advantageous, but non-limiting, embodiments, the thickness of the layer of compacted ceramic powder KP is substantially homogeneous along the whole of its extension; in particular (even more advantageously, but without limitation), the thickness of the first portion P1 is substantially the same as (i.e., coincides with) the thickness of the second portion P2.

Even more in particular, advantageously, but without limitation, the aforesaid at least one cross section of the layer of compacted ceramic powder KP the thickness of which is measured by the measuring device 17 is comprised in the first portion P1 (i.e., is a cross section of the first portion P1).

According to some advantageous, but non-exclusive, embodiments (such as the one illustrated in Fig. 2) the (each) measuring device 17' (17) comprises (in particular, consists of) a pair of feelers.

Alternatively, the (each) measuring device 17' (17) comprises (in particular, consists of) at least one sensor capable of measuring, advantageously with a precision below around 0.02 mm, the thickness of the layer of compacted ceramic powder KP.

Advantageously, but without limitation, the conveyor device 9 ends in the area of (the end of) the compacting station 7, and is arranged and configured (in particular, is aligned with the conveyor device 10) to transfer at least the first portion P1 and the second portion P2 (in particular the plurality of compacted ceramic powder articles MCP) formed by cutting the layer of compacted ceramic powder KP (when compacting takes place by means of a continuous compacting assembly 2) or by compressing several dosed quantities of ceramic powder CP (when compacting takes place by means of a discontinuous compacting machine) along the segment PB of the given path P.

In particular, advantageously, but without limitation, the conveyor device 10 moves the first portion P1 and the second portion P2 (in particular the plurality of compacted ceramic powder articles MCP) at a speed different to the speed with which the conveyor device 9 conveys the (uncompacted) ceramic powder CP to the (and through the) compacting station 7. More precisely, the speed of the conveyor device 10 adapts to the speed with which the compacted ceramic powder articles MCP move coming out of the segment PA of the given path P so as to always ensure correct distancing between the compacted ceramic powder articles MCP that move along the second segment PB of the given path P. The correct distancing between the compacted ceramic powder articles MCP (together, as will be explained in the following, with the arrangement in line and with the configuration of the detection station 11) advantageously allows detecting of the properties (in particular, at least the weight and a quantity correlated with the density) of each compacted ceramic powder article MCP independently from the other compacted ceramic powder articles MCP and without blocking the movement of the compacted ceramic powder articles MCP along the segment PB of the given path P, with clear advantages in terms of production continuity and efficiency.

Advantageously, but without limitation, the detection system 1 comprises a detection device 18, which is arranged along the given path P, advantageously, but without limitation, along the segment PB of the given path P, in particular at the detection station 11, and is configured to detect at least one quantity correlated with the density of at least an area of the first portion P1 of the layer of compacted ceramic powder KP, in particular when this (first portion P1) is at the detection station 11. In detail, advantageously, this first portion P1 has a given width and a given length and is comprised in (in particular, coincides with) one (even more in particular with the first - among those moved coming out of the segment PA of the given path P) of the aforesaid compacted ceramic powder articles MCP.

According to some advantageous, but non-limiting, embodiments, the detection device 18 is configured to detect at least one quantity correlated with the density (in particular, of the whole) of the first portion P1 of the layer of compacted ceramic powder KP. In other words, according to some advantageous, but non-limiting, embodiments, the quantity correlated with the density of the first portion P1 of the layer of compacted ceramic powder KP remains the same along the whole of the extension of this first portion P1. In this case, the aforesaid area of the first portion P1 of the layer of compacted ceramic powder KP coincides with the whole (of the extension) of the first portion P1.

Even more advantageously, but without limitation, the detection device 18 is configured to detect the quantity correlated with the density of the first portion P1 of the layer of compacted ceramic powder KP in proximity of (even more in particular, in the area of) the aforesaid cross section that the measuring device 17, 17' measures the thickness of.

Advantageously, but without limitation, the detection device 18 is arranged (immediately) adjacent to the measuring device 17, 17'. According to yet other advantageous, but non-limiting, embodiments (as already mentioned above), the detection device 18 comprises the measuring device 17, 17'.

Advantageously, but without limitation, the detection device 18 is configured to (also) detect a quantity correlated with the density also of at least one second first portion P2 of the layer of compacted ceramic powder KP (in particular, of at least an area of the second portion P2) or of a further layer of compacted ceramic powder (not illustrated), in particular when this (the second portion P2) is at the detection station 11. Advantageously, also this second portion P2 has a given width and a given length and is comprised in (in particular, coincides with) one (even more in particular with the second - among those moved coming out of the segment PA of the given path P) of the aforesaid compacted ceramic powder articles MCP. Also in this case, according to some advantageous, but non-limiting, embodiments, the quantity correlated with the density of the second portion P2 of the layer of compacted ceramic powder KP remains the same along the whole of the extension of this second portion P2, so that the aforesaid area of the second portion P2 of the layer of compacted ceramic powder KP coincides with the whole (of the extension) of the second portion P2.

The expression "quantity correlated with the density" means a quantity based on the density of these portions P1, P2, in particular that is the same as the density of these portions P1, P2 except for a constant that depends on the quality of the ceramic material, i.e., on the type (for example, on the composition) of the ceramic powder CP used to produce the layer of compacted ceramic powder KP.

Advantageously, but without limitation, the expression "quantity correlated with the density" of the layer of compacted ceramic powder KP means a quantity proportional to the density of the layer of compacted ceramic powder KP. More in particular (in this case), advantageously, but without limitation, the coefficient of proportionality between the "quantity correlated with the density" and the density of the layer of compacted ceramic powder KP itself is a constant value that is based on the quality of the ceramic material, i.e., on the type (for example, on the composition) of the ceramic powder CP used to produce the layer of compacted ceramic powder KP.

In detail, according to some advantageous but non-limiting embodiments of the invention, such as the one illustrated in Fig. 2, the detection device 18 comprises: an emission device 19, which is arranged along the given path P at the detection station 11 and is configured to emit an X-ray beam having a given emission intensity towards a first side L1 of the first portion P1, when this is at the detection station 11, so that said X-ray beam goes through it and goes out from a second side L2 of this first portion P1, opposite the first side L1; an acquisition device 20, which is arranged along the given path P at the detection station 11 and is configured to detect an output intensity of the X-ray beam going out from the second side L2 of the first portion P1; and a processing unit 21, configured to determine the aforesaid quantity correlated with the density of the first portion P1 based on the emission intensity, on the output intensity and on the thickness of this first portion P1.

In particular, advantageously, the emission device 19 is configured to emit an X-ray beam of given intensity, as described above, on each portion P1, P2 (i.e., on each compacted ceramic powder article MCP) at the detection station 11, and similarly the acquisition device 20 is configured to detect an output intensity of the X-ray beam going out from the second side L2 of each portion P1, P2 (i.e., of each compacted ceramic powder article MCP) so as to evaluate this quantity correlated with the density for each portion P1, P2 (i.e., for each compacted ceramic powder article MCP).

According to some embodiments, the "quantity correlated with the density" of a layer of compacted ceramic powder KP is a relative density. Even more in particular, advantageously, but without limitation, this "quantity correlated with the density" (or relative density) of a layer of compacted ceramic powder KP is a density value estimated (only) based on the emission intensity and on the output intensity of the aforesaid X-ray beam emitted by the emission device 19 on the layer of compacted ceramic powder KP; in particular, on the respective portion P1 and/or P2 of the layer of compacted ceramic powder KP. Even more advantageously, but without limitation, the expression "quantity correlated with the density" of a layer of compacted ceramic powder KP refers to a measurement of the capacity of this layer of compacted ceramic powder KP to absorb X-rays.

In detail, advantageously, but not necessarily, the processing unit 21 is configured to determine this quantity correlated with the density by means of the Beer-Lambert law.

When the compacting device 8 is a continuous compacting assembly 2, advantageously, but without limitation, the detection station 11 is located along the segment PB of the given path P, in particular downstream of the cutting device 16, and the quantity correlated with the density of the first portion P1 and of the second portion P2 is detected after these have been separated (i.e., cut) from the layer of compacted ceramic powder KP. Alternatively, the detection station 11 can be upstream of the cutting device 16 and the quantity correlated with the density can be detected before the first portion P1 and the second portion P2 are separated from the layer of compacted ceramic powder KP.

According to some non-limiting embodiments (such as the one illustrated), the detection system 1 also comprises a weighing device 22, arranged along the segment PB of the given path P and configured to determine a weight of at least the first portion P1 of the layer of compacted ceramic powder KP. In particular, when the compacting device 8 comprises a continuous compacting assembly 2 and a cutting device 16, the weighing device 22 is advantageously arranged downstream of the cutting device 16 to measure the weight of the aforesaid first portion P1 of the layer of compacted ceramic powder KP independently from the others, i.e., to detect the weight of a single compacted ceramic powder article MCP, independently from the others.

Advantageously, but without limitation, the detection system 1 furthermore comprises a control assembly 23, which is connected to the weighing device 22, to the measuring device 17 and/or 17' and to the detection device 18 and is designed to estimate an actual density of at least the aforesaid second portion P2 of the layer of compacted ceramic powder KP or of a further layer of compacted ceramic powder (not illustrated in the attached figures) based on the data detected by the detection device 18, by the weighing device 22 and by the measuring device 17 and/or 17', and in particular also based on the given width and on the given length of at least the first portion P1.

In detail, advantageously, but without limitation, the control assembly 23 is configured to: determine an absolute density of at least the first portion P1 based on the weight, the thickness, the given width and the given length of this first portion P1; estimate a correction coefficient based on comparison between the absolute density and the aforesaid quantity correlated with the density of the first portion P1; and to determine the actual density of the second portion P2 of the layer of compacted ceramic powder KP, or of the further layer of compacted ceramic powder KP, based on the quantity correlated with the density of this second portion P2 and on the previously estimated correction coefficient.

According to some advantageous, but non-limiting, embodiments (such as the one illustrated in Fig. 1) the control assembly 23 comprises, in turn: a processing unit 24 connected to the measuring device 17 and/or 17', and to the weighing device 22 and configured to determine an absolute density of at least the first portion P1 based on the weight, the thickness, the given width and the given length of this first portion P1; and a processing unit 25 connected at least to the detection device 18 and to said processing unit 24 and configured to compare the absolute density and the aforesaid quantity correlated with the density of the first portion P1 so as to determine a correction coefficient. In this case, advantageously, but without limitation, one between the processing unit 24 and the processing unit 25 is configured to determine the actual density of the second portion P2 based on the quantity correlated with the density of this second portion P2 and of the correction coefficient.

Even more advantageously, this control assembly 23, advantageously produced as described above, is configured to estimate an actual density of all the compacted ceramic powder articles MCP that arrive at the detection station 11, based on data detected by the detection device 18 (in particular, on the quantity correlated with the density of each compacted ceramic powder article MCP), by the weighing device 22 (in particular, on the weight of at least the first portion P1) and by the measuring device 17 and/or 17' (in particular, on the thickness of the layer of compacted ceramic powder KP, even more in particular of at least the first portion P1), and even more in particular also based on the given width and the given length of at least the first portion P1.

It is understood that advantageously, but not necessarily, the processing unit 24 and/or the processing unit 25 and/or the processing unit 21 can coincide with one another, i.e., there can be a single processing unit, which can optionally coincide with the processing unit of the whole production line of ceramic products, in particular of ceramic slabs or tiles, when the detection system 1 is part of (is arranged along) the production line of ceramic products.

Advantageously, but without limitation, the control assembly 23 is also configured to control the feeding assembly 5 so as to vary (over time) the quantity of ceramic powder CP fed to the inlet station 4 based on the actual density of the layer of compacted ceramic powder KP detected. In particular, the control assembly 23 is configured to control the feeding assembly 5 so that the quantity of ceramic powder CP fed increases where a density below a (desired) reference density is detected and decreases where a density above a (desired) reference density is detected. Moreover, advantageously, but without limitation, in particular, the control assembly 23 is (also) configured to control the compacting device 8 so as to adjust the compacting pressure exerted by the compacting device 8 on the ceramic powder CP based on the actual density of the layer of compacted ceramic powder KP detected.

According to some advantageous, but non-limiting, embodiments (such as the one illustrated in Fig. 1), the conveyor device 9 comprises (in particular, consists of) a plurality of rollers 26, which are arranged beside one another along the second segment PB of the given path P and are oriented crosswise relative to the moving direction A to define a moving plane on which at least the first portion P1 and the second portion P2, and even more in particular all the compacted ceramic powder articles MCP, move.

In this case, according to some advantageous but non-limiting variants of the detection system 1 (such as the one illustrated partially and schematically in Fig. 3), the weighing device 22 comprises (in particular, consists of) a plurality of load cells 27, which are arranged below the aforesaid moving plane, in particular at least in the area of a part of the segment PB of the given path P and are configured to determine the weight of at least the first portion P1 while this moves on the moving plane, in particular when it (the first portion P1) is in the area of, even more in particular above, the load cells 27.

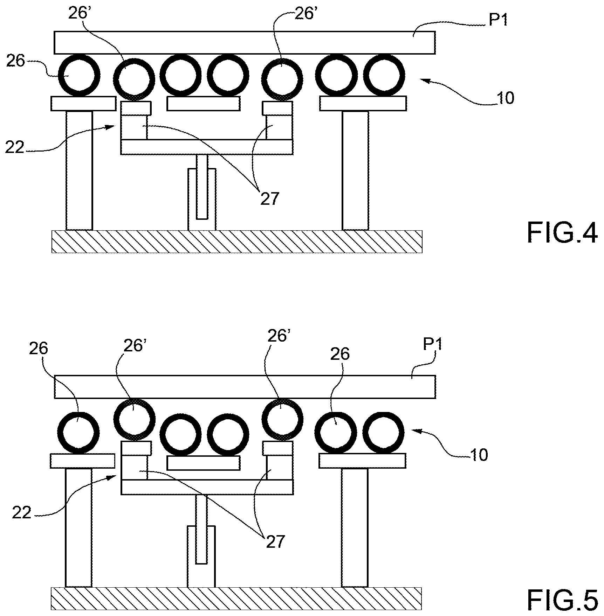

Alternatively, according to further advantageous, but non-limiting, variants of the detection system 1 (such as the one illustrated schematically in Figs. 4 and 5), the plurality of rollers 26 of the conveyor device 9 comprises vertically movable rollers 26' to lift the first portion P1 (see Fig. 5); and the weighing device 22 comprises (in particular, consists of) a plurality of load cells 27, each connected to a movable roller 26' and configured to determine said weight of the first portion P1 when the first portion P1 is arranged in the area of, in particular above, its movable rollers 26' and these movable rollers 26' are operated to lift the first portion P1.

Alternatively, according to further non-limiting embodiments not illustrated, the conveyor device 10 comprises (in particular, consists of) a conveyor belt that extends along the second segment PB of the given path P and defines a moving plane and the weighing device 22 comprises (in particular, consists of) a plurality of load cells arranged below the moving plane (in particular in contact with, or in any case connected to, the conveyor belt) and configured to determine the weight of at least the first portion P1 while this moves on the moving plane, in particular when it is in the area of, even more in particular above, the load cells 27.

It is also understood that the weighing device 22 could be produced in any other way that allows detection of the weight of at least the first portion P1 of the layer of compacted ceramic powder KP with sufficient precision to allow correct evaluation of the aforesaid correction coefficient.

In this regard, according to some advantageous, but non-limiting embodiments, the detection system 1 could be configured to form a first portion P1 specifically sized to ensure greater precision in evaluating the weight (also) with weighing devices 22 of a known type. In particular, the control assembly 23 could be configured to (in particular, control the cutting device 16, when present, or the discontinuous compacting machine so as to) form a first portion P1 having a length and a width sufficient to ensure, taking account of the thickness of the layer of compacted ceramic powder KP and of the measurement precision achievable by the weighing device 22 used, a correct and precise evaluation of the weight and consequently of the absolute density of the first portion P1 and therefore the correction coefficient. Even more in particular, in this case the control assembly 23 could be configured to reduce the length (and optionally the width) of the first portion P1 when the thickness of this first portion P1 increases so as to minimize the variation of weight to be evaluated also when the thickness of the layer of compacted ceramic powder KP varies.

In accordance with a further aspect of the present invention, a method to detect the density of a layer of compacted ceramic powder KP is provided. In particular, the method is advantageously, but without limitation, implemented by the detection system 1 described above.

Advantageously, but without limitation, the method comprises a first compacting step, during which (uncompacted) ceramic powder CP is compacted by a compacting device 8 (advantageously, but without limitation, produced in accordance with one of the embodiments described above) that applies a compacting pressure on the (uncompacted) ceramic powder CP so as to obtain a layer of compacted ceramic powder KP; and a moving step, during which the layer of compacted ceramic powder KP is conveyed along a given path P in a moving direction A by a conveyor assembly 3 (advantageously, but without limitation, of the type described above).

Advantageously, but without limitation, at least when the compacting device 8 comprises a continuous compacting assembly 2, the first compacting step is simultaneous with the moving step, i.e., as better described above with reference to the detection system 1, compacting of the ceramic powder CP takes place while it moves along the segment PA of the given path P. Moreover, in this case (advantageously, but without limitation) the method also comprises a cutting step, at least partially subsequent to the first compacting step, during which a cutting device 16 (advantageously, but without limitation, of the type described above) cuts the layer of compacted ceramic powder KP crosswise so as to obtain at least the first portion P1 and the second portion P2, in particular a plurality of compacted ceramic powder articles MCP, each having a respective first portion P1, P2 of the layer of compacted ceramic powder KP which has a given width and a given length.

According to some non-limiting variants, not illustrated, when the compacting device 8 comprises (in particular, consists of) a discontinuous compacting machine, the layer of compacted ceramic powder KP generated during the first compacting step (advantageously) comprises, in particular coincides with, the first portion P1 and the method also comprises a second compacting step, similar to the first compacting step, during which the (uncompacted) ceramic powder CP is compacted so as to obtain a further layer of compacted ceramic powder, which (advantageously) comprises, in particular coincides with, the second portion P2. In this case (i.e., when the second compacting step is provided), during the moving step the further layer of compacted ceramic powder is conveyed by the conveyor device 9 out of the segment PA of the given path P so that the first portion P1 of the layer of compacted ceramic powder KP, generated during the first compacting step, and the second portion P2 of the further layer of compacted ceramic powder KP, generated during the second compacting step, are conveyed along the segment PB of the given path P arranged one after the other.

Advantageously, the method furthermore comprises a measuring step during which a measuring device 17 and/or 17' (advantageously, but without limitation, of the type described above) arranged along the given path P carries out at least one measurement, advantageously at least two measurements, even more advantageously at least three measurements, of a thickness of at least one cross section of the layer of compacted ceramic powder KP; and a first detection step, during which the aforesaid quantity correlated with the density of the first portion P1 (in particular, of at least an area of this first portion P1) is detected.

As already mentioned above with reference to the detection system 1, according to some advantageous and non-limiting embodiments, the thickness of the layer of compacted ceramic powder KP is substantially homogenous along the whole of its extension; in particular (even more advantageously, but not necessarily) the thickness of the first portion P1 is substantially the same as (i.e., coincides with) the thickness of the second portion P2.

Even more in particular, advantageously, but without limitation, during the aforesaid measuring step, the measuring device 17 and/or 17' carries out at least one measurement of a thickness of the first portion P1. In other words, advantageously but without limitation, the aforesaid at least one cross section of the layer of compacted ceramic powder KP the thickness of which is measured during the aforesaid measuring step is comprised in the first portion P1 (i.e., is a cross section of the first portion P1).

Advantageously, the method also envisages a weighing step, during which a weighing device 22 (advantageously, but without limitation, of the type described above), arranged along said given path P, in particular along the segment PB of the given path P, determines a weight of at least the first portion P1; a first processing step, at least partially subsequent to the measuring step and to the weighing step, during which a processing unit 24 determines an absolute density of at least the first portion P1 based on the weight, the thickness, the given width and the given length of this first portion P1; and a comparison step, which is at least partially subsequent to the first processing step and to the first detection step and during which a processing unit 25 compares the absolute density and the quantity correlated with the density of the first portion P1 so as to determine a correction coefficient. In other words, the processing unit 25 determines the deviation between the absolute density and the quantity correlated with the density of the first portion P1, this deviation being based on (in particular, coinciding with) the correction coefficient.

Advantageously, but without limitation, the measuring step, the weighing step, the first processing step and the comparison step can be repeated several times (i.e., for different compacted ceramic powder articles MCP), so as to evaluate with greater precision the correction coefficient and/or verify that there are no variations in the value of this correction coefficient. The method also envisages at least a second detection step during which the aforesaid quantity is detected for at least the aforesaid second portion P2 of the layer of compacted ceramic powder KP or of a further layer of compacted ceramic powder KP; and a calculation step, at least partially subsequent to the comparison step and to the second detection step, during which an actual density of the second portion P2 is estimated based on the quantity detected during the second detection step and on the correction coefficient.

Advantageously, but without limitation, as explained above with reference to the detection system 1, the detection step to detect the quantity and the calculation step are repeated for all the portions P1, P2 of the layer of compacted ceramic powder KP (i.e., for all the compacted ceramic powder articles MCP) that arrive at the detection station 11, so as to evaluate the actual density of each compacted ceramic powder article MCP.

The first detection step and the second detection step can be carried out before or after the cutting step, when this is provided (i.e., when the compacting device 8 comprises the continuous compacting assembly 2). In other words, as explained in relation to the detection system 1, the quantity correlated with the density of the first portion P1 and of the second portion P2, can be detected in any area of the first portion P1 and of the second portion P2, respectively, and indifferently before or after these portions P1 and P2 have been separated (i.e., cut) from the layer of compacted ceramic powder KP.

Advantageously, but without limitation, the method furthermore comprises an adjustment step, which is at least partially subsequent to the calculation step and during which the compacting pressure and/or the quantity of (uncompacted) ceramic powder CP fed is adjusted based on the actual density estimated during the calculation step, so as to ensure that the density remains comprised between around 1.5 kg/dm³ and around 2.5 kg/dm³, in particular between around 1.9 kg/dm³ and around 2.1 kg/dm³, even more in particular equal to around 2 kg/dm³. In particular, as better explained in relation to the detection system 1, this adjustment step is advantageously implemented by acting on the feeding assembly 5 and/or on the compacting device 8.

Advantageously, but not necessarily, at least the measuring step, the first detection step and the second detection step are simultaneous to the moving step, i.e., they take place while the conveyor assembly 3 is active and transports the layer of compacted ceramic powder KP and/or the various portions P1,P2 along the given path P.

According to some advantageous, but non-limiting, embodiments, the first detection step and the second detection step each comprise: a relative irradiation sub-step, during which an emission device 19 (advantageously, but not necessarily of the type describe above), arranged along the given path P (advantageously, along the segment PB of the given path P; even more in particular at the detection station 11) emits an X-ray beam having a given emission intensity towards one first side L1 of the first portion P1 or of the second portion P2, respectively, so that this X-ray beam goes through the first portion P1 or the second portion P2, respectively, and goes out from a second side L2 of the relative portion P1, P2, opposite said first side L1; and a relative acquisition sub-step, subsequent to the irradiation step, during which an acquisition device 20 (advantageously, but not necessarily, of the type described above), arranged along the given path P (in particular along the segment PB of the given path P; even more in particular at the detection station 11) detects an output intensity of the X-ray beam coming out of the second side L2 of the first portion P1 or of the second portion P2, respectively.

Again according to these advantageous, but non-limiting embodiments, the first detection step and the second detection step furthermore comprise: a relative measuring sub-step during which a further measuring device 17' (advantageously, but not necessarily, of the type described above), arranged along the given path P (advantageously, along the segment PB of the given path P; even more in particular at the detection station 11), carries out at least one measurement of a thickness of at least one cross section of the first portion P1 or of the second portion P2, respectively; and a relative processing sub-step during which a processing unit 21 determines said quantity correlated with the density of the first portion P1 or of the second portion P2, respectively, based on the emission intensity, on the output intensity and on the thickness measured during the measuring sub-step.

According to some advantageous, but non-exclusive, embodiments, when this measuring sub-step is provided, it is simultaneous to, in particular coincides with, the measuring step described above; and, even more advantageously, the measuring device 17 and the further measuring device 17' coincide with one another (as explained above in relation to the detection system 1).

Moreover, advantageously, but without limitation, in order to improve the precision of this measurement, both during the measuring step and optionally during the relative measuring sub-step, measurement of a thickness is carried out at least in the area of two (in particular, at least three) cross sections of the first portion P1 and/or of the second portion P2, respectively.

According to other advantageous, but non-exclusive embodiments, when the conveyor device 10 comprises vertically movable rollers 26' (as better explained above in relation to the detection system 1) and the weighing device 22 comprises the aforesaid plurality of load cells 27 connected to the movable rollers 26', the weighing step comprises: a standstill sub-step during which at least the first portion P1 stands still in the area of (in particular above) the movable rollers 26'; and a lifting sub-step, at least partially simultaneous with the standstill sub-step, during which the movable rollers 26' (are operated in a known way and) lift the first portion P1 and the load cells 27 detect the weight thereof.

According to other embodiments (for example those that provide for a conveyor device 10 in the form of conveyor belt or having a plurality of rollers 26 but without movable rollers 26'), the weighing step is simultaneous with the moving step, i.e., takes place while the first portion P1 moves along the given path P, in particular along the segment PB of the given path P.

The present invention has various advantages compared to the state of the art, some of which are set forth in the following.

The detection system 1 and the method to detect the density of the layer of compacted ceramic powder KP described above allow an evaluation of the aforesaid correction coefficient without interrupting the movement of the conveyor assembly 3 and without the need to create a specific sample, thus allowing a rapid and reliable calibration of the detection system 1, without interrupting the normal production flow, therefore with minimum production downtime.

Moreover, the method and the detection system 1 of the invention allow entirely automated detection of the density and calibration of the detection system 1, without the need for skilled operators that, for example, evaluate the absolute density of at least one sample and calibrate the detection system 1 accordingly, with consequent advantages both in terms of costs, due to reduction in labour costs, and in terms of precision.

## Claims

1. -A method to detect the density of a layer of compacted ceramic powder (KP), the method comprises:
a first compacting step, during which ceramic powder (CP) is compacted by a compacting device (8), which applies a compacting pressure to the ceramic powder (CP) so as to obtain said layer of compacted ceramic powder (KP);
a moving step, during which said layer of compacted ceramic powder (KP) is conveyed along a given path (P) in a moving direction (A) by a conveyor assembly (3); and
a measuring step, during which a measuring device (17; 17'), which is arranged along said given path (P), carries out at least one measurement of a thickness of at least one cross section of said layer of compacted ceramic powder (KP);
a first detection step, during which a quantity is detected, which is correlated with the density of at least a first portion (P1) of the layer of compacted ceramic powder (KP);
the method being **characterized in that** it comprises:
a weighing step, during which a weighing device (22), which is arranged along said given path (P), determines a weight of said at least one first portion (P1) of the layer of compacted ceramic powder (KP); said at least one first portion (P1) having a given width and a given length;
a first processing step, which is at least partially subsequent to said measuring step and to said weighing step and during which a first processing unit (24) determines an absolute density of said at least one first portion (P1) of the layer of compacted ceramic powder (KP) based on said weight, said thickness, said given width and said given length;
a comparison step, which is at least partially subsequent to said first processing step and to said first detection step and during which a second processing unit (25) compares said absolute density and said quantity correlated with the density of said first portion (P1) in order to determine a correction coefficient;
a second detection step, during which said quantity is detected for at least one second portion (P2) of the layer of compacted ceramic powder (KP) or of a further layer of compacted ceramic powder;
a calculation step, which is at least partially subsequent to said comparison step and to said second detection step and during which an actual density of said at least one second portion (P2) is detected based on the quantity detected during the second detection step and on said correction coefficient.

2. A method according to claim 1, and comprising at least one second compacting step, during which the ceramic powder (CP) is compacted by a further compacting device, which applies a compacting pressure to the ceramic powder (CP) so as to obtain said further layer of compacted ceramic powder; in particular, said compacting device (8) and said further compacting device coinciding with one another;
during said moving step, said further layer of compacted ceramic powder is conveyed by said conveyor assembly (3) so that said at least one first portion (P1) of said layer of compacted ceramic powder (KP) and said at least one second portion (P2) of said further layer of compacted ceramic powder are conveyed along said given path (P) one after the other.

3. A method according to claim 1, wherein: said first compacting step is at least partially simultaneous with said moving step;
said compacting device (8) comprises (in particular, is) a continuous compacting assembly (2), which is arranged along said given path (P) and applies a compacting pressure to said ceramic powder (CP) while said ceramic powder (CP) moves along the given path (P); and
the method comprises at least one cutting step, which is at least partially subsequent to said first compacting step and during which a cutting device (16) cuts said layer of compacted ceramic powder (KP) crosswise so as to obtain said first portion (P1) and said second portion (P2) of said layer of compacted ceramic powder (KP).

4. A method according to any one of the preceding claims, wherein said first detection step and said second detection step each comprise:
a relative irradiation sub-step, during which an emission device (19), which is arranged along said given path (P), emits an X-ray beam, having a given emission intensity, towards a first side (L1) of said at least one first portion (P1), during said first detection step, and of said at least one second portion (P2), respectively, during said second detection step, so that said X-ray beam passes through said at least one first portion (P1) and said at least one second portion (P2), respectively, and goes out from a second side (L2) of said at least one first portion and of said at least one second portion (P2), respectively, said second side (L2) being opposite said first side (L1);
a relative acquisition sub-step, which is subsequent to said irradiation sub-step and during which an acquisition device (20), which is arranged along said given path (P), detects an output intensity of said X-ray beam coming out of said second side (L2) of said at least one first portion (P1) during the first detection step, and of said at least one second portion (P2) during the second detection step, respectively;
a relative measuring sub-step, during which a further measuring device (17'), which is arranged along said given path (P), carries out at least one measurement of a thickness of at least one cross section of said at least one first portion (P1) and of said at least one second portion (P2), respectively; and
a relative processing sub-step, during which a third processing unit (21) determines said quantity correlated with the density of said at least one first portion (P1) or of said at least one second portion (P2), respectively, based on said emission intensity, on said output intensity and on said thickness measured during said measuring sub-step.

5. A method according to any one of the preceding claims, wherein, during said measuring step, said measuring device (17) carries out said at least one measurement of a thickness in the area of at least two (in particular, at least three) cross sections of said layer of compacted ceramic powder (KP), in particular of said at least one first portion (P1) of said layer of compacted ceramic powder (KP);
in particular, during the relative measuring sub-step, said further measuring device (17') carries out said at least one measurement of a thickness in the area of at least two (in particular, at least three) cross sections of said at least one first portion (P1) and of said at least one second portion (P2), respectively.

6. A method according to any one of the preceding claims, wherein at least said measuring step, said first detection step and said second detection step are simultaneous with said moving step.

7. A method according to any one of the preceding claims, wherein:
said conveyor assembly (3) comprises a conveyor device (10), which conveys at least said at least one first portion (P1) and said at least one second portion (P2) along a segment (PB) of said given path (P);
said conveyor device (10) comprises (in particular, consists of) a plurality of rollers (26) arranged beside one another along said segment (PB) of said given path (P) and oriented crosswise relative to the moving direction (A);
said plurality of rollers (26) comprises vertically movable rollers (26');
said weighing step comprises a standstill sub-step, during which said at least one first portion (P1) of said layer of compacted ceramic powder (KP) stands still in the area of said movable rollers (26'), and a lifting sub-step, which is at least partially simultaneous with said standstill step and during which said movable rollers (26') lift said at least one first portion (P1); and
said weighing device (22) comprises (in particular, consists of) a plurality of load cells (27), which are each connected to one of said movable rollers (26') and determine the weight of said at least one first portion (P1) lifted during said lifting sub-step.

8. A method according to any one of the claims from 1 to 6, wherein said weighing step is simultaneous with said moving step.

9. A method according to any one of the preceding claims and comprising an adjustment step, which is at least partially subsequent to said calculation step and during which the compacting pressure is adjusted based on said actual density estimated during said calculation step.

10. A detection system (1) to detect the density of a layer of compacted ceramic powder (KP), the detection system (1) comprises:
a compacting device (8), which is configured to apply a compacting pressure to a ceramic powder (CP) so as to compact the ceramic powder (CP) and obtain said layer of compacted ceramic powder (KP);
a conveyor assembly (3), which is configured to receive and move, along a given path (P) in a moving direction (A), said layer of compacted ceramic powder (KP);
a measuring device (17; 17'), which is arranged along said given path (P) and is configured to measure at least a thickness of at least one cross section of said layer of compacted ceramic powder (KP);
the detection system (1) being **characterized in that** it comprises:
a weighing device (22), which is arranged along said given path (P) and is configured to determine a weight of at least one first portion (P1) of the layer of compacted ceramic powder (KP); said at least one first portion (P1) having a given width and a given length;
a detection device (18), which is arranged along said given path (P) and is configured to detect a quantity correlated with the density of said at least one first portion (P1) of the layer of compacted ceramic powder (KP) and of at least a second portion (P2) of the layer of compacted ceramic powder (KP), or of a further layer of compacted ceramic powder (KP);
a control assembly (23), which is connected to the weighing device (22), to the measuring device (17; 17') and to the detection device (18) and is designed to estimate an actual density of said at least one second portion (P2) of the layer of compacted ceramic powder (KP) or of said further layer of compacted ceramic powder (KP), based on the data detected by the detection device (18) by the weighing device (22) and by the measuring device (17; 17').

11. A detection system (1) according to claim 10, wherein said control assembly (23) is configured to: determine an absolute density of at least said first portion (P1) based on the weight, the thickness, the given width and the given length of said first portion (P1); estimate a correction coefficient based on comparison between said absolute density and said quantity correlated with the density of said first portion (P1); and to determine said actual density of said at least one second portion (P2) of the layer of compacted ceramic powder (KP), or of said further layer of compacted ceramic powder (KP), based on said quantity correlated with the density of said second portion (P2) and of said correction coefficient.

12. A detection system (1) according to claim 10 or 11, wherein:
the control assembly (23) comprises: a first processing unit (24), which is connected at least to the measuring device (17; 17') and to the weighing device (22) and is configured to determine an (in particular, said) absolute density of said at least one first portion (P1) based on said weight, said thickness, said given width and said given length; and a second processing unit (25), which is connected to said detection device (18) and to said first processing unit (24) and is configured to compare said absolute density and said quantity correlated with the density of said first portion (P1) in order to determine a (in particular, said) correction coefficient;
either said first processing unit (24) or said second processing unit (25) being configured to determine said actual density of said second portion (P2) based on said quantity correlated with the density of said at least one second portion (P2) and on said correction coefficient.

13. A detection system (1) according to claim 11 or 12, wherein said detection device (18) comprises:
an emission device (19), which is arranged along said given path (P) at a detection station (11) and is configured to emit an X-ray beam, having a given emission intensity, towards a first side (L1) of said at least one first portion (P1) or of said at least one second portion (P2), respectively, when said at least one first portion (P1) or said at least one second portion (P2) are at said detection station (11), so that said X-ray beam goes out from a second side (L2) of said at least one first portion (P1) or of said at least one second portion (P2), respectively, after having gone through it; said second side (L2) being opposite the first side (L1);
an acquisition device (20), which is arranged along said given path (P) at said detection station (11) and is configured to detect an output intensity of said X-ray beam coming out of said second side (L2) of said at least one first portion (P1) or of said at least one second portion (P2), respectively; and
a third processing unit (21), which is configured to determine said quantity correlated with the density of said at least one first portion (P1) or of said at least one second portion (P2), respectively, based on said emission intensity, on said output intensity and on said thickness.

14. A detection system (1) according to claim 13, wherein said first processing unit (24) and/or said second processing unit (25) and/or said third processing unit (21) coincide with one another.

15. A detection system (1) according to any one of the claims from 10 to 14, wherein:
said conveyor assembly (3) comprises a conveyor device (10), which is configured to convey at least said at least one first portion (P1) and said at least one second portion (P2) along a segment (PB) of said given path (P);
said conveyor device (10) comprises (in particular, consists of) a conveyor belt, which extends along said moving direction (A) and defines a moving plane.

16. A detection system (1) according to any one of the claims from 10 to 14, wherein:
said conveyor assembly (3) comprises a conveyor device (10), which is configured to convey at least said at least one first portion (P1) and said at least one second portion (P2) along a segment (PB) of said given path (P);
said conveyor device (10) comprises (in particular, consists of) a plurality of rollers (26), which are arranged beside one another along said segment (PB) of said given path (P) and are oriented crosswise relative to the moving direction (A) so as to define a moving plane (PA).

17. A detection system (1) according to claim 15 or 16, wherein said weighing device (22) comprises (in particular, consists of) a plurality of load cells (27), which are arranged under said moving plane and are configured to determine said weight of said at least one first portion (P1) of said layer of compacted ceramic powder (KP), while said at least one first portion (P1) moves on said moving plane.

18. A detection system (1) according to claim 16, wherein: said plurality of rollers (26) comprises vertically movable rollers (26') to lift said at least one first portion (P1) of said layer of compacted ceramic powder (KP); and
said weighing device (22) comprises (in particular, consists of) a plurality of load cells (27), which are each connected to one of said movable rollers (26') and configured to determine said weight of said at least one first portion (P1) when said at least one first portion (P1) is arranged on said movable rollers (26') and said movable rollers (26') are operated so as to lift said at least one first portion (P1).

## Patentansprüche

1. Verfahren zur Detektion der Dichte einer Schicht aus verdichtetem Keramikpulver (KP), wobei das Verfahren aufweist:
einen ersten Verdichtungsschritt, während dem Keramikpulver (CP) durch eine Verdichtungsvorrichtung (8), die einen Verdichtungsdruck auf das Keramikpulver (CP) anwendet, verdichtet wird, um die Schicht aus verdichtetem Keramikpulver (KP) zu erhalten;
einen Bewegungsschritt, während dem die Schicht aus verdichtetem Keramikpulver (KP) von einer Fördereranordnung (3) in einer Bewegungsrichtung (A) entlang eines gegebenen Wegs (P) bewegt wird; und
einen Messschritt, während dem eine Messvorrichtung (17; 17'), die entlang des gegebenen Wegs (P) angeordnet ist, wenigstens eine Messung einer Dicke wenigstens eines Querschnitts der Schicht aus verdichtetem Keramikpulver (KP) ausführt;
einen ersten Detektionsschritt, während dem eine Größe detektiert wird, welche mit der Dichte wenigstens eines ersten Abschnitts (P1) der Schicht aus verdichtetem Keramikpulver (KP) korreliert ist;
wobei das Verfahren **dadurch gekennzeichnet ist, dass** es aufweist:
einen Wiegeschritt, während dem eine Wiegevorrichtung (22), die entlang des gegebenen Wegs (P) angeordnet ist, ein Gewicht des wenigstens einen ersten Abschnitts (P1) der Schicht aus verdichtetem Keramikpulver (KP) bestimmt; wobei der wenigstens eine erste Abschnitt (P1) eine gegebene Breite und eine gegebene Länge hat;
einen ersten Verarbeitungsschritt, der wenigstens teilweise an den Messschritt und den Wiegeschritt anschließt und während dem eine erste Verarbeitungseinheit (24) basierend auf dem Gewicht, der Dicke, der gegebenen Breite und der gegebenen Länge eine absolute Dichte des wenigstens einen ersten Abschnitts (P1) der Schicht aus verdichtetem Keramikpulver (KP) bestimmt;
einen Vergleichsschritt, der wenigstens teilweise an den ersten Verarbeitungsschritt und an den ersten Detektionsschritt anschließt und während dem eine zweite Verarbeitungseinheit (25) die absolute Dichte und die mit der Dichte des ersten Abschnitts (P1) korrelierte Größe vergleicht, um einen Korrekturkoeffizienten zu bestimmen;
einen zweiten Detektionsschritt, während dem die Größe für wenigstens einen zweiten Abschnitt (P2) der Schicht aus verdichtetem Keramikpulver (KP) oder eine weitere Schicht aus verdichtetem Keramikpulver bestimmt wird;
einen Berechnungsschritt, der wenigstens teilweise an den Verdichtungsschritt und an den zweiten Detektionsschritt anschließt und während dem eine tatsächliche Dichte des wenigstens einen zweiten Abschnitts (P2) basierend auf der während des zweiten Detektionsschritts detektierten Größe und auf dem Korrekturkoeffizienten detektiert wird.

2. Verfahren nach Anspruch 1, das ferner wenigstens einen zweiten Verdichtungsschritt aufweist, während dem das Keramikpulver (CP) von einer weiteren Verdichtungsvorrichtung, die einen Verdichtungsdruck auf das Keramikpulver (CP) anwendet, verdichtet wird, um die weitere Schicht aus verdichtetem Keramikpulver zu erhalten; wobei die Verdichtungsvorrichtung (8) und die weitere Verdichtungsvorrichtung insbesondere eins sind;
wobei die weitere Schicht aus verdichtetem Keramikpulver während dem Bewegungsschritt von der Fördereranordnung (3) derart befördert wird, dass der wenigstens eine erste Abschnitt (P1) der Schicht aus verdichtetem Keramikpulver (KP) und der wenigstens eine zweite Abschnitt (P2) der weiteren Schicht aus verdichtetem Keramikpulver nacheinander entlang des gegebenen Wegs (P) befördert werden.

3. Verfahren nach Anspruch 1, wobei: der erste Verdichtungsschritt wenigstens teilweise gleichzeitig mit dem Bewegungsschritt ist; wobei die Verdichtungsvorrichtung (8) eine kontinuierliche Verdichtungsanordnung (2) aufweist (insbesondere ist), die entlang des gegebenen Wegs (P) angeordnet ist und einen Verdichtungsdruck auf das Keramikpulver (CP) anwendet, während das Keramikpulver (CP) sich entlang des gegebenen Wegs (P) bewegt; und
wobei das Verfahren wenigstens einen Schneidschritt aufweist, der wenigstens teilweise an den ersten Verdichtungsschritt anschließt und während dem eine Schneidvorrichtung (16) die Schicht aus verdichtetem Keramikpulver (KP) quer schneidet, um den ersten Abschnitt (P1) und den zweiten Abschnitt (P2) der Schicht aus verdichtetem Keramikpulver (KP) zu erhalten.

4. Verfahren nach einem der vorhergehenden Ansprüche, wobei der erste Detektionsschritt und der zweite Detektionsschritt jeweils aufweisen:
einen jeweiligen Bestrahlungsteilschritt, während dem eine Emissionsvorrichtung (19), die entlang des gegebenen Wegs (P) angeordnet ist, während dem ersten Detektionsschritt bzw. dem zweiten Detektionsschritt einen Röntgenstrahl mit einer gegebenen Emissionsintensität in Richtung einer ersten Seite (L1) jeweils des wenigstes einen ersten Abschnitts (P1) bzw. des wenigstens einen zweiten Abschnitts (P2) emittiert, so dass der Röntgenstrahl den wenigstens einen ersten Abschnitt (P1) und den wenigstens einen zweiten Abschnitt (P2) jeweils durchläuft und von einer zweiten Seite (L2) des wenigstens einen ersten Abschnitts (P1) und des wenigstens einen zweiten Abschnitts (P2) jeweils herausgeht, wobei die zweite Seite (L2) entgegengesetzt zu der ersten Seite (L1) ist;
einen jeweiligen Erlangungsteilschritt, der an den Bestrahlungsteilschritt anschließt und während dem eine Erlangungsvorrichtung (20), die entlang des gegebenen Wegs (P) angeordnet ist, eine Ausgangsintensität des Röntgenstrahls, die aus der zweiten Seite (L2) des wenigstens einen ersten Abschnitts (P1) bzw. des wenigstens einen zweiten Abschnitts (P2) herauskommt, während des ersten Detektionsschritts bzw. während des zweiten Detektionsschritts detektiert;
einen jeweiligen Messteilschritt, während dem eine weitere Messvorrichtung (17'), die entlang des gegebenen Wegs (P) angeordnet ist, wenigstens eine Messung einer Dicke jeweils wenigstens eines Querschnitts des wenigstens einen ersten Abschnitts (P1) und des wenigstens einen zweiten Abschnitts (P2) ausführt; und
einen jeweiligen Verarbeitungsteilschritt, während dem eine dritte Verarbeitungseinheit (21) jeweils die mit der Dichte des wenigstens einen ersten Abschnitts (P1) oder des wenigstens einen zweiten Abschnitts (P2) korrelierte Größe basierend auf der Emissionsintensität, auf der Ausgangsintensität und auf der während des Messteilschritts gemessenen Dicke bestimmt.

5. Verfahren nach einem der vorhergehenden Ansprüche,
wobei die Messvorrichtung (17) während des Messschritts wenigstens eine Messung einer Dicke in dem Bereich von wenigstens zwei (insbesondere wenigstens drei) Querschnitten der Schicht aus verdichtetem Keramikpulver (KP), insbesondere des wenigstens einen ersten Abschnitts (P1) der Schicht aus verdichtetem Keramikpulver (KP) ausführt;
wobei die weitere Messvorrichtung (17') insbesondere während des jeweiligen Messteilschritts die wenigstens eine Messung einer Dicke in dem Bereich von wenigstens zwei (insbesondere wenigstens drei) Querschnitten jeweils des wenigstens einen ersten Abschnitts (P1) und des wenigstens einen zweiten Abschnitts (P2) ausführt.

6. Verfahren nach einem der vorhergehenden Ansprüche, wobei wenigstens der Messschritt, der erste Detektionsschritt und der zweite Detektionsschritt gleichzeitig mit dem Bewegungsschritt stattfinden.

7. Verfahren nach einem der vorhergehenden Ansprüche, wobei:
die Fördereranordnung (3) eine Fördervorrichtung (10) aufweist, die wenigstens den wenigstens einen ersten Abschnitt (P1) und den wenigstens einen zweiten Abschnitt (P2) entlang eines Segments (PB) des gegebenen Wegs (P) befördert;
die Fördervorrichtung (10) mehrere Walzen (26) aufweist (insbesondere daraus besteht), die entlang des Segments (PB) des gegebenen Wegs (P) nebeneinander angeordnet sind und relativ zu der Bewegungsrichtung (A) quer orientiert sind;
die mehreren Walzen (26) vertikal bewegliche Walzen (26') aufweisen;
der Wiegeschritt einen Stillstandsteilschritt, während dem der wenigstens eine erste Abschnitt (P1) der Schicht aus verdichtetem Keramikpulver (KP) in dem Bereich der beweglichen Walzen (26') stillsteht, und einen Hebeteilschritt aufweist, der wenigstens teilweise gleichzeitig mit dem Stillstandschritt stattfindet und während dem die beweglichen Walzen (26') den wenigstens einen ersten Abschnitt (P1) heben; und
wobei die Wiegevorrichtung (22) mehrere Lastzellen (27) aufweist (insbesondere daraus besteht), die jeweils mit einer der beweglichen Walzen (26') verbunden sind und das Gewicht des wenigstens einen ersten Abschnitts (P1), der während des Hebeteilschritts angehoben wird, bestimmen.

8. Verfahren nach einem der Ansprüche 1 bis 6, wobei der Wiegeschritt gleichzeitig mit dem Bewegungsschritt stattfindet.

9. Verfahren nach einem der vorhergehenden Ansprüche, das einen Einstellschritt aufweist, der wenigstens teilweise an den Berechnungsschritt anschließt und während dem der Verdichtungsdruck basierend auf der während des Berechnungsschritts geschätzten tatsächlichen Dichte eingestellt wird.

10. Detektionssystem (1) zum Detektieren der Dichte einer Schicht aus verdichtetem Keramikpulver (KP), wobei das Detektionssystem (1) aufweist:
eine Verdichtungsvorrichtung (8), die konfiguriert ist, um einen Verdichtungsdruck auf ein Keramikpulver (CP) anzuwenden, um die Schicht aus verdichtetem Keramikpulver (KP) zu erhalten;
eine Fördereranordnung (3), die konfiguriert ist, um die Schicht aus verdichtetem Keramikpulver (KP) zu empfangen und in einer Bewegungsrichtung (A) entlang eines gegebenen Wegs (P) zu bewegen;
eine Messvorrichtung (17; 17'), die entlang des gegebenen Wegs (P) angeordnet ist und konfiguriert ist, um wenigstens eine Dicke wenigstens eines Querschnitts der Schicht aus verdichtetem Keramikpulver (KP) zu messen;
wobei das Detektionssystem (1) **dadurch gekennzeichnet ist, dass** es aufweist:
eine Wiegevorrichtung (22), die entlang des gegebenen Wegs (P) angeordnet ist, und konfiguriert ist, um ein Gewicht wenigstens eines ersten Abschnitts (P1) der Schicht aus verdichtetem Keramikpulver (KP) zu bestimmen; wobei der wenigstens eine erste Abschnitt (P1) eine gegebene Breite und eine gegebene Länge hat;
eine Detektionsvorrichtung (18), die entlang des gegebenen Wegs (P) angeordnet ist und konfiguriert ist, um eine Größe, die mit der Dichte des wenigstens einen ersten Abschnitts (P1) der Schicht aus verdichtetem Keramikpulver (KP) und des wenigstens einen zeiten Abschnitts (P2) der Schicht aus verdichtetem Keramikpulver (KP) oder einer weiteren Schicht aus verdichtetem Keramikpulver (KP) korreliert ist, zu detektieren;
eine Steueranordnung (23), die mit der Wiegevorrichtung (22), mit der Messvorrichtung (17; 17') und mit der Detektionsvorrichtung (18) verbunden ist und konzipiert ist, um eine tatsächliche Dichte des wenigstens einen zweiten Abschnitts (P2) der Schicht aus verdichtetem Keramikpulver (KP) oder der weiteren Schicht aus verdichtetem Keramikpulver (KP) basierend auf den von der Detektionsvorrichtung (18), von der Wiegevorrichtung (22) und von der Messvorrichtung (17; 17') detektierten Daten zu schätzen.

11. Detektionssystem (1) nach Anspruch 10, wobei die Steueranordnung (23) konfiguriert ist, um: eine absolute Dichte des wenigstens einen ersten Abschnitts (P1) basierend auf dem Gewicht, der Dicke, der gegebenen Breite und der gegebenen Länge des ersten Abschnitts (P1) zu bestimmen; einen Korrekturkoeffizienten basierend auf einem Vergleich zwischen der absoluten Dichte und der mit der Dichte des ersten Abschnitts (P1) korrelierten Größe zu schätzen; und die tatsächliche Dichte des wenigstens einen zweiten Abschnitts (P2) der Schicht aus verdichtetem Keramikpulver (KP) oder der weiteren Schicht aus verdichtetem Keramikpulver (KP) basierend auf der mit der Dichte des zweiten Abschnitts (P2) korrelierten Größe und dem Korrekturkoeffizienten zu bestimmen.

12. Detektionssystem (1) nach Anspruch 10 oder 11, wobei:
die Steueranordnung (23) aufweist: eine erste Verarbeitungseinheit (24), die wenigstens mit der Messvorrichtung (17; 17') und mit der Wiegevorrichtung (22) verbunden ist und konfiguriert ist, um eine (insbesondere die) absolute Dichte des wenigstens einen ersten Abschnitts (P1) basierend auf dem Gewicht, der Dicke, der gegebenen Breite und der gegebenen Länge zu bestimmen; und eine zweite Verarbeitungseinheit (25), die mit der Detektionsvorrichtung (18) und mit der ersten Verarbeitungseinheit (24) verbunden ist und konfiguriert ist, um die absolute Dichte mit der Größe, die mit der Dichte des ersten Abschnitts (P1) korreliert ist, zu vergleichen, um einen (insbesondere den genannten) Korrekturkoeffizienten zu bestimmen;
wobei entweder die erste Verarbeitungseinheit (24) oder die zweite Verarbeitungseinheit (25) konfiguriert ist, um die tatsächliche Dichte des zweiten Abschnitts (P2) basierend auf der Größe, die mit der Dichte des wenigstens einen zweiten Abschnitts (P2) korreliert ist, und auf dem Korrekturkoeffizienten zu bestimmen.

13. Detektionssystem (1) nach Anspruch 11 oder 12, wobei die Bestimmungsvorrichtung (18) aufweist:
eine Emissionsvorrichtung (19), die entlang des gegebenen Wegs (P) an einer Detektionsstation (11) angeordnet ist und konfiguriert ist, um einen Röntgenstrahl mit einer gegebenen Emissionsintensität in Richtung einer ersten Seite (L1) jeweils des wenigstes einen ersten Abschnitts (P1) oder des wenigstens einen zweiten Abschnitts (P2) zu emittieren, wenn der wenigstens eine erste Abschnitt (P1) oder der wenigstens eine zweite Abschnitt (P2) an der Detektionsstation (11) sind, so dass der Röntgenstrahl jeweils von einer zweiten Seite (L2) des wenigstens einen ersten Abschnitts (P1) oder des wenigstens einen zweiten Abschnitts (P2) herausgeht, nachdem er ihn durchlaufen hat; wobei die zweite Seite (L2) entgegengesetzt zu der ersten Seite (L1) ist;
eine Erlangungsvorrichtung (20), die entlang des gegebenen Wegs (P) an der Detektionsstation (11) angeordnet ist und konfiguriert ist, um eine Ausgangsintensität des Röntgenstrahls, die jeweils aus der zweiten Seite (L2) des wenigstens einen ersten Abschnitts (P1) oder des wenigstens einen zweiten Abschnitts (P2) herauskommt, zu detektieren; und
eine dritte Verarbeitungseinheit (21), die konfiguriert ist, um die Größe, die jeweils mit der Dichte des wenigstens einen ersten Abschnitts (P1) oder des wenigstens einen zweiten Abschnitts (P2) korreliert ist, basierend auf der Emissionsintensität, auf der Ausgangsintensität und auf der Dicke zu bestimmen.

14. Detektionssystem (1) nach Anspruch 13, wobei die erste Verarbeitungseinheit (24) und/oder die zweite Verarbeitungseinheit (25) und/oder die dritte Verarbeitungseinheit (21) eins sind.

15. Detektionssystem (1) nach einem der Ansprüche 10 bis 14, wobei:
die Fördereranordnung (3) eine Fördervorrichtung (10) aufweist, die konfiguriert ist, um wenigstens den wenigstens einen ersten Abschnitt (P1) und den wenigstens einen zweiten Abschnitt (P2) entlang eines Segments (PB) des gegebenen Wegs (P) zu befördern;
die Fördervorrichtung (10) ein Förderband aufweist (insbesondere daraus besteht), das sich entlang der Bewegungsrichtung (A) erstreckt und eine Bewegungsebene definiert.

16. Detektionssystem (1) nach einem der Ansprüche 10 bis 14, wobei:
die Fördereranordnung (3) eine Fördervorrichtung (10) aufweist, die konfiguriert ist, um wenigstens den wenigstens einen ersten Abschnitt (P1) und den wenigstens einen zweiten Abschnitt (P2) entlang eines Segments (PB) des gegebenen Wegs (P) zu befördern;
die Fördervorrichtung (10) mehrere Walzen (26) aufweist (insbesondere daraus besteht), die entlang des Segments (PB) des gegebenen Wegs (P) nebeneinander angeordnet sind und relativ zu der Bewegungsrichtung (A) quer orientiert sind, um eine Bewegungsebene (PA) zu definieren.

17. Detektionssystem (1) nach Anspruch 15 oder 16, wobei die Wiegevorrichtung (22) mehrere Lastzellen (27) aufweist (insbesondere daraus besteht), die unter der Bewegungsebene angeordnet sind und konfiguriert sind, um das Gewicht des wenigstens einen ersten Abschnitts (P1) der Schicht aus verdichtetem Keramikpulver (KP) zu bestimmen, während der wenigstens eine erste Abschnitt (P1) sich auf der Bewegungsebene bewegt.

18. Detektionssystem (1) nach Anspruch 16, wobei: die mehreren Walzen (26) vertikal bewegliche Walzen (26') aufweisen, um den wenigstens einen ersten Abschnitt (P1) der Schicht aus verdichtetem Keramikpulver (KP) anzuheben; und
wobei die Wiegevorrichtung (22) mehrere Lastzellen (27) aufweist (insbesondere daraus besteht), die jeweils mit einer der beweglichen Walzen (26') verbunden sind und konfiguriert sind, um das Gewicht des wenigstens einen ersten Abschnitts (P1) zu bestimmen, wenn der wenigstens eine Abschnitt (P1) auf den beweglichen Walzen (26') angeordnet ist und die beweglichen Walzen (26') betätigt werden, um den wenigstens einen ersten Abschnitt (P1) anzuheben.

## Revendications

1. Procédé pour détecter la densité d'une couche de poudre de céramique compactée (KP), le procédé comprend :
une première étape de compactage, au cours de laquelle une poudre de céramique (CP) est compactée par un dispositif de compactage (8), qui applique une pression de compactage sur la poudre de céramique (CP) de façon à obtenir ladite couche de poudre de céramique compactée (KP) ;
une étape de déplacement, au cours de laquelle ladite couche de poudre de céramique compactée (KP) est transportée le long d'un chemin donné (P) dans une direction de déplacement (A) par un ensemble transporteur (3) ; et
une étape de mesure, au cours de laquelle un dispositif de mesure (17 ; 17'), qui est agencé le long dudit chemin donné (P), effectue au moins une mesure d'une épaisseur d'au moins une section transversale de ladite couche de poudre de céramique compactée (KP) ;
une première étape de détection, au cours de laquelle une quantité est détectée, qui est corrélée à la densité d'au moins une première portion (P1) de la couche de poudre de céramique compactée (KP) ;
le procédé étant **caractérisé en ce qu'il** comprend :
une étape de pesage, au cours de laquelle un dispositif de pesage (22), qui est agencé le long dudit chemin donné (P), détermine un poids de ladite au moins une première portion (P1) de la couche de poudre de céramique compactée (KP) ; ladite au moins une première portion (P1) ayant une largeur donnée et une longueur donnée ;
une première étape de traitement, qui est au moins partiellement postérieure à ladite étape de mesure et à ladite étape de pesage et au cours de laquelle une première unité de traitement (24) détermine une densité absolue de ladite au moins une première portion (P1) de la couche de poudre de céramique compactée (KP) sur la base dudit poids, de ladite épaisseur, de ladite largeur donnée et de ladite longueur donnée ;
une étape de comparaison, qui est au moins partiellement postérieure à ladite première étape de traitement et à ladite première étape de détection et au cours de laquelle une deuxième unité de traitement (25) compare ladite densité absolue et ladite quantité corrélée à la densité de ladite première portion (P1) afin de déterminer un coefficient de correction ;
une deuxième étape de détection, au cours de laquelle ladite quantité est détectée pour au moins une deuxième portion (P2) de la couche de poudre de céramique compactée (KP) ou d'une couche supplémentaire de poudre de céramique compactée ;
une étape de calcul, qui est au moins partiellement postérieure à ladite étape de comparaison et à ladite deuxième étape de détection et au cours de laquelle une densité réelle de ladite au moins une deuxième portion (P2) est détectée sur la base de la quantité détectée au cours de la deuxième étape de détection et dudit coefficient de correction.

2. Procédé selon la revendication 1, et comprenant au moins une deuxième étape de compactage, au cours de laquelle la poudre de céramique (CP) est compactée par un dispositif de compactage supplémentaire, qui applique une pression de compactage sur la poudre de céramique (CP) de façon à obtenir ladite couche supplémentaire de poudre de céramique compactée ; en particulier, ledit dispositif de compactage (8) et ledit dispositif de compactage supplémentaire coïncident l'un avec l'autre ;
au cours de ladite étape de déplacement, ladite couche supplémentaire de poudre de céramique compactée est transportée par ledit ensemble transporteur (3) de sorte que ladite au moins une première portion (P1) de ladite couche de poudre de céramique compactée (KP) et ladite au moins une deuxième portion (P2) de ladite couche supplémentaire de poudre de céramique compactée soient transportées le long dudit chemin donné (P) l'une après l'autre.

3. Procédé selon la revendication 1, dans lequel : ladite première étape de compactage est au moins partiellement simultanée à ladite étape de déplacement ; ledit dispositif de compactage (8) comprend (en particulier, est) un ensemble de compactage continu (2), qui est agencé le long dudit chemin donné (P) et applique une pression de compactage sur ladite poudre de céramique (CP) tandis que ladite poudre de céramique (CP) se déplace le long du chemin donné (P) ; et
le procédé comprend au moins une étape de découpe, qui est au moins partiellement postérieure à ladite première étape de compactage et au cours de laquelle un dispositif de découpe (16) découpe ladite couche de poudre de céramique compactée (KP) transversalement de façon à obtenir ladite première portion (P1) et ladite deuxième portion (P2) de ladite couche de poudre de céramique compactée (KP).

4. Procédé selon l'une quelconque des revendications précédentes, dans lequel ladite première étape de détection et ladite deuxième étape de détection comprennent chacune :
une sous-étape d'irradiation associée, au cours de laquelle un dispositif d'émission (19), qui est agencé le long dudit chemin donné (P), émet un faisceau de rayons X, ayant une intensité d'émission donnée, vers un premier côté (L1) de ladite au moins une première portion (P1), au cours de ladite première étape de détection, et de ladite au moins une deuxième portion (P2), respectivement, au cours de ladite deuxième étape de détection, de sorte que ledit faisceau de rayons X traverse ladite au moins une première portion (P1) et ladite au moins une deuxième portion (P2), respectivement, et sorte par un deuxième côté (L2) de ladite au moins une première portion et de ladite au moins une deuxième portion (P2), respectivement, ledit deuxième côté (L2) étant opposé audit premier côté (L1) ;
une sous-étape d'acquisition associée, qui est postérieure à ladite sous-étape d'irradiation et au cours de laquelle un dispositif d'acquisition (20), qui est agencé le long dudit chemin donné (P), détecte une intensité de sortie dudit faisceau de rayons X sortant par ledit deuxième côté (L2) de ladite au moins une première portion (P1) au cours de la première étape de détection, et de ladite au moins une deuxième portion (P2) au cours de la deuxième étape de détection, respectivement ;
une sous-étape de mesure associée, au cours de laquelle un dispositif de mesure supplémentaire (17'), qui est agencé le long dudit chemin donné (P), effectue au moins une mesure d'une épaisseur d'au moins une section transversale de ladite au moins une première portion (P1) et de ladite au moins une deuxième portion (P2), respectivement ; et
une sous-étape de traitement associée, au cours de laquelle une troisième unité de traitement (21) détermine ladite quantité corrélée à la densité de ladite au moins une première portion (P1) ou de ladite au moins une deuxième portion (P2), respectivement, sur la base de ladite intensité d'émission, de ladite intensité de sortie et de ladite épaisseur mesurée au cours de ladite sous-étape de mesure.

5. Procédé selon l'une quelconque des revendications précédentes, dans lequel, au cours de ladite étape de mesure, ledit dispositif de mesure (17) effectue ladite au moins une mesure d'une épaisseur dans la zone d'au moins deux (en particulier, d'au moins trois) sections transversales de ladite couche de poudre de céramique compactée (KP), en particulier de ladite au moins une première portion (P1) de ladite couche de poudre de céramique compactée (KP) ;
en particulier, au cours de la sous-étape de mesure associée, ledit dispositif de mesure supplémentaire (17') effectue ladite au moins une mesure d'une épaisseur dans la zone d'au moins deux (en particulier, d'au moins trois) sections transversales de ladite au moins une première portion (P1) et de ladite au moins une deuxième portion (P2), respectivement.

6. Procédé selon l'une quelconque des revendications précédentes, dans lequel au moins ladite étape de mesure, ladite première étape de détection et ladite deuxième étape de détection sont simultanées à ladite étape de déplacement.

7. Procédé selon l'une quelconque des revendications précédentes, dans lequel :
ledit ensemble transporteur (3) comprend un dispositif transporteur (10), qui transporte au moins ladite au moins une première portion (P1) et ladite au moins une deuxième portion (P2) le long d'un segment (PB) dudit chemin donné (P) ;
ledit dispositif transporteur (10) comprend (en particulier, consiste en) une pluralité de rouleaux (26) agencés les uns à côté des autres le long dudit segment (PB) dudit chemin donné (P) et orientés transversalement par rapport à la direction de déplacement (A) ;
ladite pluralité de rouleaux (26) comprend des rouleaux verticalement mobiles (26') ;
ladite étape de pesage comprend une sous-étape d'immobilisation, au cours de laquelle ladite au moins une première portion (P1) de ladite couche de poudre de céramique compactée (KP) reste immobile dans la zone desdits rouleaux mobiles (26'), et une sous-étape de levage, qui est au moins partiellement simultanée à ladite étape d'immobilisation et au cours de laquelle lesdits rouleaux mobiles (26') soulèvent ladite au moins une première portion (P1) ; et
ledit dispositif de pesage (22) comprend (en particulier, consiste en) une pluralité de dynamomètres (27), qui sont chacun raccordés à l'un desdits rouleaux mobiles (26') et déterminent le poids de ladite au moins une première portion (P1) soulevée au cours de ladite sous-étape de levage.

8. Procédé selon l'une quelconque des revendications 1 à 6, dans lequel ladite étape de pesage est simultanée à ladite étape de déplacement.

9. Procédé selon l'une quelconque des revendications précédentes et comprenant une étape d'ajustement, qui est au moins partiellement postérieure à ladite étape de calcul et au cours de laquelle la pression de compactage est ajustée sur la base de ladite densité réelle estimée au cours de ladite étape de calcul.

10. Système de détection (1) pour détecter la densité d'une couche de poudre de céramique compactée (KP), le système de détection (1) comprend :
un dispositif de compactage (8), qui est configuré pour appliquer une pression de compactage sur une poudre de céramique (CP) de façon à compacter la poudre de céramique (CP) et obtenir ladite couche de poudre de céramique compactée (KP) ;
un ensemble transporteur (3), qui est configuré pour recevoir et déplacer, le long d'un chemin donné (P) dans une direction de déplacement (A), ladite couche de poudre de céramique compactée (KP) ;
un dispositif de mesure (17 ; 17'), qui est agencé le long dudit chemin donné (P) et est configuré pour mesurer au moins une épaisseur d'au moins une section transversale de ladite couche de poudre de céramique compactée (KP) ;
le système de détection (1) étant **caractérisé en ce qu'il** comprend :
un dispositif de pesage (22), qui est agencé le long dudit chemin donné (P) et est configuré pour déterminer un poids d'au moins une première portion (P1) de la couche de poudre de céramique compactée (KP) ; ladite au moins une première portion (P1) ayant une largeur donnée et une longueur donnée ;
un dispositif de détection (18), qui est agencé le long dudit chemin donné (P) et est configuré pour détecter une quantité corrélée à la densité de ladite au moins une première portion (P1) de la couche de poudre de céramique compactée (KP) et d'au moins une deuxième portion (P2) de la couche de poudre de céramique compactée (KP), ou d'une couche supplémentaire de poudre de céramique compactée (KP) ;
un ensemble de commande (23), qui est raccordé au dispositif de pesage (22), au dispositif de mesure (17 ; 17') et au dispositif de détection (18) et est conçu pour estimer une densité réelle de ladite au moins une deuxième portion (P2) de la couche de poudre de céramique compactée (KP) ou de ladite couche supplémentaire de poudre de céramique compactée (KP), sur la base des données détectées par le dispositif de détection (18), par le dispositif de pesage (22) et par le dispositif de mesure (17 ; 17').

11. Système de détection (1) selon la revendication 10, dans lequel ledit ensemble de commande (23) est configuré pour: déterminer une densité absolue d'au moins ladite première portion (P1) sur la base du poids, de l'épaisseur, de la largeur donnée et de la longueur donnée de ladite première portion (P1) ; estimer un coefficient de correction sur la base de la comparaison entre ladite densité absolue et ladite quantité corrélée à la densité de ladite première portion (P1) ; et pour déterminer ladite densité réelle de ladite au moins une deuxième portion (P2) de la couche de poudre de céramique compactée (KP), ou de ladite couche supplémentaire de poudre de céramique compactée (KP), sur la base de ladite quantité corrélée à la densité de ladite deuxième portion (P2) et dudit coefficient de correction.

12. Système de détection (1) selon la revendication 10 ou 11, dans lequel : l'ensemble de commande (23) comprend : une première unité de traitement (24), qui est raccordée au moins au dispositif de mesure (17 ; 17') et au dispositif de pesage (22) et est configurée pour déterminer une (en particulier, ladite) densité absolue de ladite au moins une première portion (P1) sur la base dudit poids, de ladite épaisseur, de ladite largeur donnée et de ladite longueur donnée ; et une deuxième unité de traitement (25), qui est raccordée audit dispositif de détection (18) et à ladite première unité de traitement (24) et est configurée pour comparer ladite densité absolue et ladite quantité corrélée à la densité de ladite première portion (P1) afin de déterminer un (en particulier, ledit) coefficient de correction ; l'une ou l'autre parmi ladite première unité de traitement (24) ou ladite deuxième unité de traitement (25) étant configurée pour déterminer ladite densité réelle de ladite deuxième portion (P2) sur la base de ladite quantité corrélée à la densité de ladite au moins une deuxième portion (P2) et dudit coefficient de correction.

13. Système de détection (1) selon la revendication 11 ou 12, dans lequel ledit dispositif de détection (18) comprend :
un dispositif d'émission (19), qui est agencé le long dudit chemin donné (P) au niveau d'un poste de détection (11) et est configuré pour émettre un faisceau de rayons X, ayant une intensité d'émission donnée, vers un premier côté (L1) de ladite au moins une première portion (P1) ou de ladite au moins une deuxième portion (P2), respectivement, lorsque ladite au moins une première portion (P1) ou ladite au moins une deuxième portion (P2) sont au niveau dudit poste de détection (11), de sorte que ledit faisceau de rayons X sorte par un deuxième côté (L2) de ladite au moins une première portion (P1) ou de ladite au moins une deuxième portion (P2), respectivement, après avoir traversée celle-ci ; ledit deuxième côté (L2) étant opposé au premier côté (L1) ;
un dispositif d'acquisition (20), qui est agencé le long dudit chemin donné (P) au niveau dudit poste de détection (11) et est configuré pour détecter une intensité de sortie dudit faisceau de rayons X sortant par ledit deuxième côté (L2) de ladite au moins une première portion (P1) ou de ladite au moins une deuxième portion (P2), respectivement ; et
une troisième unité de traitement (21), qui est configurée pour déterminer ladite quantité corrélée à la densité de ladite au moins une première portion (P1) ou de ladite au moins une deuxième portion (P2), respectivement, sur la base de ladite intensité d'émission, de ladite intensité de sortie et de ladite épaisseur.

14. Système de détection (1) selon la revendication 13, dans lequel ladite première unité de traitement (24) et/ou ladite deuxième unité de traitement (25) et/ou ladite troisième unité de traitement (21) coïncident les unes avec les autres.

15. Système de détection (1) selon l'une quelconque des revendications 10 à 14, dans lequel :
ledit ensemble transporteur (3) comprend un dispositif transporteur (10), qui est configuré pour transporter au moins ladite au moins une première portion (P1) et ladite au moins une deuxième portion (P2) le long d'un segment (PB) dudit chemin donné (P) ;
ledit dispositif transporteur (10) comprend (en particulier, consiste en) une bande transporteuse, qui s'étend le long de ladite direction de déplacement (A) et définit un plan de déplacement.

16. Système de détection (1) selon l'une quelconque des revendications 10 à 14, dans lequel :
ledit ensemble transporteur (3) comprend un dispositif transporteur (10), qui est configuré pour transporter au moins ladite au moins une première portion (P1) et ladite au moins une deuxième portion (P2) le long d'un segment (PB) dudit chemin donné (P) ;
ledit dispositif transporteur (10) comprend (en particulier, consiste en) une pluralité de rouleaux (26), qui sont agencés les uns à côté des autres le long dudit segment (PB) dudit chemin donné (P) et sont orientés transversalement par rapport à la direction de déplacement (A) de façon à définir un plan de déplacement (PA).

17. Système de détection (1) selon la revendication 15 ou 16, dans lequel ledit dispositif de pesage (22) comprend (en particulier, consiste en) une pluralité de dynamomètres (27), qui sont agencés sous ledit plan de déplacement et sont configurés pour déterminer ledit poids de ladite au moins une première portion (P1) de ladite couche de poudre de céramique compactée (KP), tandis que ladite au moins une première portion (P1) se déplace sur ledit plan de déplacement.

18. Système de détection (1) selon la revendication 16, dans lequel : ladite pluralité de rouleaux (26) comprend des rouleaux verticalement mobiles (26') pour soulever ladite au moins une première portion (P1) de ladite couche de poudre de céramique compactée (KP) ; et
ledit dispositif de pesage (22) comprend (en particulier, consiste en) une pluralité de dynamomètres (27), qui sont chacun raccordés à l'un desdits rouleaux mobiles (26') et configurés pour déterminer ledit poids de ladite au moins une première portion (P1) lorsque ladite au moins une première portion (P1) est agencée sur lesdits rouleaux mobiles (26') et lesdits rouleaux mobiles (26') sont mis en fonctionnement de façon à soulever ladite au moins une première portion (P1).
